# EUROPEAN PATENT SPECIFICATION

(11) **EP 3 971 428 B1**
(45) Date of publication and mention of the grant of the patent: **29.10.2025**
(21) Application number: 21197257.5
(22) Date of filing: 16.09.2021
(51) Int. Cl.: F16B 43/00

(54) **FIXING WASHER**
FIXIERSCHEIBE
RONDELLE DE FIXATION

(30) Priority: 16.09.2020 GB 202014598
(43) Date of publication of application: 23.03.2022
(73) Proprietor: TFXR Property Limited, Waterlooville, Hampshire, PO7 7AN (GB)
(72) Inventor: HILTON, Andrew, Havant, PO9 1HU (GB)
(74) Representative: Barker Brettell LLP

(56) References cited:
- CA-A1- 2 053 884
- CN-A- 111 594 523
- JP-A- 2019 148 330

## Description

### Technical Field

The present application relates to fixing washers.

### Background

Backerboard is known to be used as a sub-surface for supporting (decorative) tiling on walls. The tiling may comprise ceramic, thin brick or marble, of generally planar form. Backerboards can take various forms. One form may be termed cement boards or tile backerboards and comprise rigid extruded polystyrene with a bonded cementitious coating applied to each side thereof. Backerboards, regardless of construction are of generally panel/planar form. Another variety of backerboard comprises a central layer of material which is sandwiched between two outer layers (being of a different material to the central layer) which are bonded to the central layer. The outer layers may serve as reinforcing layers, and may comprise a mesh material, and the central layer may comprise a cementitious material, such as gypsum. Backerboards are typically capable of being attached to an underlying structure, such as a timber framework structure by way of fasteners. In order to distribute the load applied by the fastener, backerboard washers are used to effect this attachment. Such washers receive a fastener and serve to distribute the load exerted by the fastener to the backerboard.

CA2053884 discloses a known fixing washer. Another washer is known from CN 111 594 523 A.

We have devised an improved fixing washer.

### Summary

The invention is set out in the appended set of claims.

According to the invention there is provided a fixing washer comprising:
an outer portion and an inner portion,
the outer portion is radially outward of the inner portion,
and the inner portion defines a recessed region which is arranged, in use, to receive a head of a fastener, and
the washer also comprises a number of channels, each of said channels extends through the inner portion and the outer portion.

The channels may extend aligned with a radius of the washer (at least in plan view). The channels may be described as ribs.

The channels may be set into or protrude from an outward surface of a side of the washer.

Each of the channels may comprise a curved transverse cross-section.

The outer portion may comprise a number of apertures. Each aperture may comprise a though-hole.

Where the outer portion comprises apertures, the channels provided may extend between neighbouring apertures. The channels may extend substantially centrally of two neighbouring apertures.

The inner portion may be described as a sunken portion. The inner portion may comprise a countersink.

The outer portion may be of substantially convex shape (at least when not in use), and may have a bowed or curved shape (in particular when viewed on a radial cross section). The outer portion may be of substantially frusto-conical shape. More generally, in a non-use condition, the outer portion may be described as of a domed shape.

There may be provided a junction portion which connects the inner portion to the outer portion. The junction portion may comprise a radiussed or curved shape. The outer portion, in a non-use condition, may depend from the junction region.

The inner portion may be of substantially frusto-conical shape.

The relative orientations of the respective shapes of each of the inner portion and the outer portion may be described as one being of inverse orientation to the other.

The outer portion is arranged to have resilient flexure. This may be such that its shape in an in-use condition is arranged and intended to differ from that in its non-use condition. The outer portion is arranged to adopt a flatter shape or configuration in the in-use condition. The shape of the outer portion may in use be arranged to flatten when the washer is used to secure a backerboard (or other object) to a host support structure to which it is affixed. The washer may be described as having a sprung configuration, or being resiliently biased.

The outer portion may comprise or be of a substantially annular shape.

The washer may be of substantially disc form. The washer may be termed a fixing disc.

The washer may be configured to be suitable for use in affixing backerboard to a host support structure. By backerboard we include any suitable generally planar structure or material onto which tiling is to be affixed, which may include two layers of cementitious material.

The washer may comprise two opposing sides. In use, one side may be arranged to face a host support structure and the opposite side may be arranged to face away from the host support structure.

When viewed in side elevation, the inner portion extends below the radially outermost margin of the outer portion, at least when not in use.

The peripheral edge of the washer may be substantially circular.

The fastener which the washer is arranged to receive may comprise a driveable head and a threaded shank.

The invention may comprise one or features described in the description and/or shown in the drawings, either singularly or in combination.

### Brief Description of the Drawings

Various embodiments will now be described by way of example only, with reference to the following drawings in which:
**Figure 1** is a perspective view of a washer being a first embodiment of the invention,

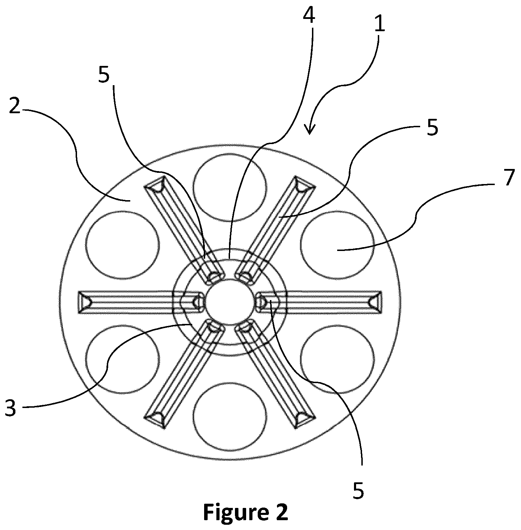

**Figure 2** is a plan view of the washer of Figure 1,
**Figure 3** is a side elevation of the washer of Figure 1,
**Figure 4** is a radial cross-sectional of a fixer washer of a second embodiment of the invention,
**Figure 5** is a plan view of the fixer washer of Figure 4 securing a backerboard to a host support structure, and
**Figure 6** is a cross-section of Figure 5 on A-A.

### Detailed Description

There is now described a novel fixing washer 1, which is arranged to secure a backerboard, or similar, to a host support structure.

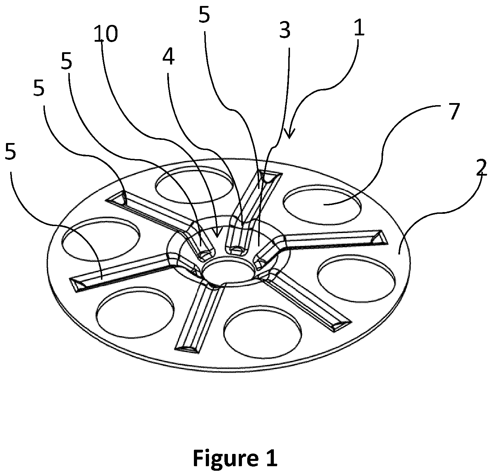

With reference initially to Figure 1 the fixing washer 1 comprises an outer portion 2 and an inner portion 3.

The outer portion 2 is located radially outward of the inner portion 3 and surrounds the inner portion. The outer portion 2 is of generally domed shape. As will be described in more detail below, this is a sprung configuration which is of benefit when the fixing washer 1 is used to attach a backerboard to a host support structure.

The outer portion 2 of the fixing washer is of generally annular shape and is provided with a number of through-holes, or apertures, 7, which are provided at equally angularly spaced locations, with their centres located on the same radial distance.

The fixing washer 1 further comprises a junction region 4 which serves a transition between the inner portion 3 and the outer portion 2.

The inner portion 3 defines a recessed region 10 which is arranged, in use, to receive a head of a fastener. The recessed region 10 is of substantially frusto-conical shape. The inner portion defines an aperture centrally thereof which is arranged to receive the threaded shank of a fastener. The recessed region 10 may be described as a countersunk portion.

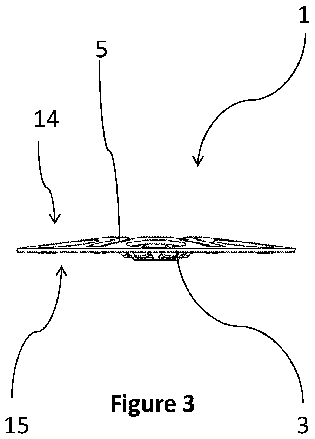

Reference is made to Figure 3 which shows the fixing washer in side cross-section. The lowermost extent of the inner portion 2 can be seen to extend lower than the position of the outermost margin/periphery of the outer portion 3. (Similar remarks apply to the second embodiment which is described below.)

The fixing washer 1 also comprises a number of channels 5, and each of said channels extends though the inner portion 2 and the outer portion 3. The channels 5 are of curved transverse cross-section. The channels 5 are set into an outward side surface of the washer 1. The channels 5 are substantially aligned with a respective radius of the washer, when viewed in plan. The channels 5 extend from the outer portion 2 to the inner portion 3, though the junction region 4, in a substantially continuous and unbroken manner. In relation to the extent of the channels 5 in the outer portion 2, these run substantially centrally between successive apertures 7, and terminate prior to the circular periphery of the washer 1.

Reference is made to Figure 3 which shows a side elevation of the fixer washer 1. The fixer washer 1 comprises two opposite sides, 14 and 15. The side 14 is intended to face outwardly when the washer is installed, whereas the side 15 is intended to face towards the backerboard which the fixing washer 1 is serving to secure in position to an underlying support structure.

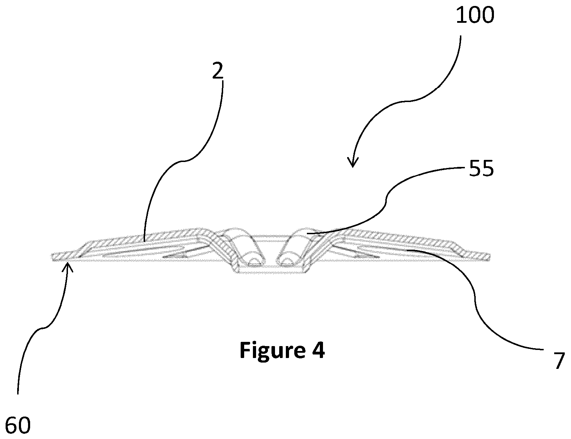

Figure 4 shows a fixer washer 100 compliant with a second embodiment of the invention. The fixer washer 100 is similar in many respects to the fixer washer 1, and like reference numerals are used or can be used to denote or characterise the same or very similar features.

One point of difference which the fixer washer 100 has over the fixer washer 1 is that the periphery of the washer (which is also the periphery of the outer portion), has a stepped/flanged formation, as shown at 60. In this, the radially outermost annular formation is set lower as compared to the major portion of the outer portion. This formation 60 contributes to the overall strength and rigidity and helps to prevent the washer from inverting (from concave to convex) if too high a torque force is applied to the fastener during installation. Although the formation 60 is shown in relation to the second embodiment, it is equally applicable and of benefit to the first embodiment.

A second point of difference is the channels 55, which unlike the channels 5 of first embodiment protrude/are raised. In this sense they may be termed ribs.

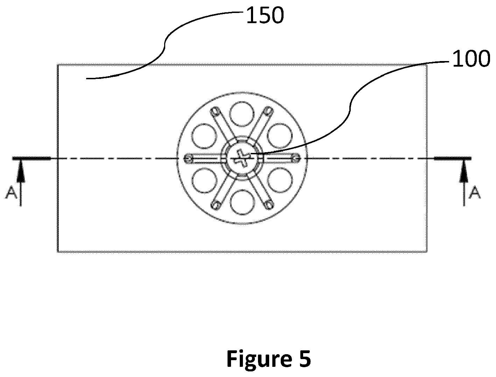

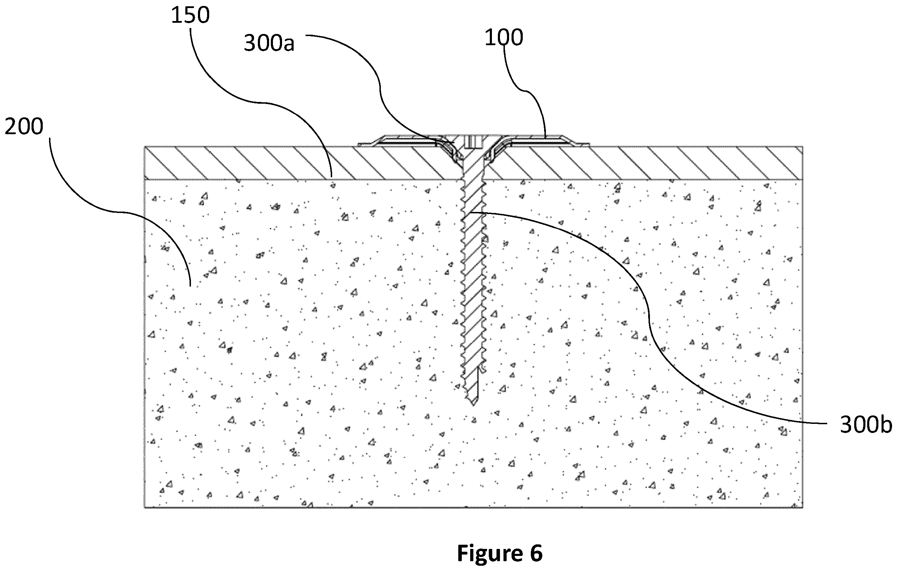

Reference is made to Figures 5 and 6 which show the fixer washer 100 *in situ* affixing a backerboard 150 to a support structure 200. This has been achieved by way of a screw fastener 300. A driving torque was applied to the keyed head 300a of the fastener with the threaded shank 300b extending through a central hole in the countersunk region of the inner portion. When the underside of the fastener head 300a bears against the inner portion, the washer 100 is forced against the backerboard 150. This urges the otherwise domed outer portion to flatten, countering the inherent spring force therein. As can be seen in Figure 6, when the fastener is fully driven home to within the countersunk recess, the outer portion sits flat (or substantially so) against the backerboard. The sprung characteristic of the outer portion enhances the fixing strength of the backerboard to the underlying host support structure. The presence of the channels extending in both the outer portion and inner portion further enhances said fixing strength. In particular, the channels/ribs extending though both the outer portion and the inner portion enhance the strength of the washer and also increases the force needed to compress the (sprung) outer portion during use. The extent of the channels/ribs additionally helps with preventing inversion of the washer. Inversion (i.e. including concave to convex) of a fixing washer is undesirable since this obviates the functionality of the washer for its primary use. With reference to Figure 6, it can be seen, and as described above, that the outer portion is flatten when the washer 1 is installed. In the absence of the channels/ribs as described there would be a risk that the washer could invert by turning inside itself, so that the outer portion would bow away from being in gripping engagement with the backerboard.

The above described extent of the ribs/channels also assists with the washer gripping the backerboard and preventing/inhibiting rotational forces during installation. These advantages are applicable to both the first and second embodiments.

It will be appreciated that although the first and second embodiments show respective numbers of apertures and channels/ribs, any other of one or each of those features could be used in variant embodiments.

## Claims

1. A fixing washer comprising:
an outer portion (2) and an inner portion (3),
a junction portion (4) which connects the inner portion to the outer portion,
the outer portion is radially outward of the inner portion, and is of domed configuration, the outer portion (2) is arranged to have resilient flexure, and said outer portion is arranged to adopt a flatter shape or configuration in the in-use condition, as compared to the non-use condition and the inner portion defines a recessed region (10) which is arranged, in use, to receive a head of a fastener, and
the washer also comprises a number of channels (5), each of said channels extends through the inner portion, the junction portion and the outer portion.

2. A fixing washer as claimed in claim 1 in which the channels (5) extend aligned with a radius of the washer (at least in plan view).

3. A fixing washer as claimed in claim 1 or claim 2 in which the outer portion (2) comprises a number of apertures (7).

4. A fixing washer as claimed in any preceding claim in which the inner portion (3) comprises a countersink (10).

5. A fixing washer as claimed in any preceding claim in which the inner portion (3) is of substantially frusto-conical shape.

6. A fixing washer as claimed in any preceding claim in which the washer comprises two opposing sides and in use, one side arranged to face a structure which the washer serves to secure in place and the opposite side arranged to face away from said structure.

7. A fixing washer as claimed in claim 3 in which, the channels (10) provided extend between neighbouring apertures (7).

## Patentansprüche

1. Befestigungsunterlegscheibe, umfassend:
einen äußeren Abschnitt (2) und einen inneren Abschnitt (3),
einen Verbindungsabschnitt (4), der den inneren Abschnitt mit dem äußeren Abschnitt verbindet,
wobei der äußere Abschnitt radial außerhalb des inneren Abschnitts angeordnet ist und eine Kuppelkonfiguration hat, wobei der äußere Abschnitt (2) so angeordnet ist, dass er federnde Biegsamkeit hat, und wobei der äußere Abschnitt so angeordnet ist, dass er im Gebrauchszustand, im Vergleich zum Nichtgebrauchszustand, eine flachere Form oder Konfiguration annimmt, und der innere Abschnitt einen ausgesparten Bereich (10) definiert, der im Gebrauch zur Aufnahme eines Kopfs eines Befestigungselements angeordnet ist, und
wobei die Unterlegscheibe ferner eine Anzahl von Kanälen (5) umfasst, wobei sich jeder der Kanäle durch den inneren Abschnitt, den Verbindungsabschnitt und den äußeren Abschnitt erstreckt.

2. Befestigungsunterlegscheibe nach Anspruch 1, wobei sich die Kanäle (5) (zumindest in Draufsicht) auf einen Radius der Unterlegscheibe ausgerichtet erstrecken.

3. Befestigungsunterlegscheibe nach Anspruch 1 oder Anspruch 2, wobei der äußere Abschnitt (2) eine Anzahl von Öffnungen (7) umfasst.

4. Befestigungsunterlegscheibe nach einem der vorhergehenden Ansprüche, wobei der innere Abschnitt (3) eine Senkung (10) umfasst.

5. Befestigungsunterlegscheibe nach einem der vorhergehenden Ansprüche, wobei der innere Abschnitt (3) im Wesentlichen kegelstumpfförmig ist.

6. Befestigungsunterlegscheibe nach einem der vorhergehenden Ansprüche, wobei die Unterlegscheibe zwei gegenüberliegende Seiten umfasst, wobei im Gebrauch eine Seite so angeordnet ist, dass sie einer Struktur zugewandt ist, zu deren Befestigung an Ort und Stelle die Scheibe dient, und die gegenüberliegende Seite so angeordnet ist, dass sie von der Struktur abgewandt ist.

7. Befestigungsunterlegscheibe nach Anspruch 3, wobei sich die vorgesehenen Kanäle (10) zwischen benachbarten Öffnungen (7) erstrecken.

## Revendications

1. Rondelle de fixation comprenant :
une partie externe (2) et une partie interne (3),
une partie de jonction (4) qui relie la partie interne à la partie externe,
la partie externe étant radialement à l'extérieur de la partie interne, et étant de configuration bombée, la partie externe (2) étant conçue pour présenter une flexion élastique, et ladite partie externe étant conçue pour adopter une forme ou une configuration plus plate dans l'état d'utilisation, par rapport à l'état de non-utilisation, et la partie interne définissant une région évidée (10) qui est conçue, lors de l'utilisation, pour recevoir une tête d'une fixation, et
la rondelle comprenant également plusieurs canaux (5), chacun desdits canaux s'étendant à travers la partie interne, la partie de jonction et la partie externe.

2. Rondelle de fixation selon la revendication 1, les canaux (5) s'étendant en alignement avec un rayon de la rondelle (au moins en vue en plan).

3. Rondelle de fixation selon la revendication 1 ou la revendication 2, la partie externe (2) comprenant plusieurs ouvertures (7).

4. Rondelle de fixation selon l'une quelconque des revendications précédentes, la partie interne (3) comprenant une fraisure (10).

5. Rondelle de fixation selon l'une quelconque des revendications précédentes, la partie interne (3) présentant une forme sensiblement tronconique.

6. Rondelle de fixation selon l'une quelconque des revendications précédentes, la rondelle comprenant deux côtés opposés et, lors de l'utilisation, un côté étant conçu pour faire face à une structure que la rondelle sert à fixer en place et le côté opposé étant conçu pour faire face à l'opposé de ladite structure.

7. Rondelle de fixation selon la revendication 3, les canaux (10) fournis s'étendant entre des ouvertures (7) voisines.
